# EUROPÄISCHE PATENTSCHRIFT

(11) **EP 2 017 523 B1**
(45) Veröffentlichungstag und Bekanntmachung des Hinweises auf die Patenterteilung: **15.09.2010**
(21) Anmeldenummer: 08160571.9
(22) Anmeldetag: 16.07.2008
(51) Int. Cl.: F16L 59/135

(54) **Halterung für Rohre**
Holding device for pipes
Fixation pour tuyaux

(30) Priorität: 17.07.2007 AT 11272007
(43) Veröffentlichungstag der Anmeldung: 21.01.2009
(73) Patentinhaber: Mikl, Josef, 5020 Salzburg (AT)
(72) Erfinder: Mikl, Josef, 5020 Salzburg (AT)
(74) Vertreter: Babeluk, Michael

(56) Entgegenhaltungen:
- EP-A- 0 293 824
- DE-A1-102004 053 374
- DE-U1- 8 628 193
- DE-U1- 9 421 308
- FR-A- 862 681
- FR-A- 2 442 366
- GB-A- 1 446 136
- US-A- 5 381 833

## Beschreibung

Die vorliegende Erfindung betrifft eine Halterung für Rohre dem Oberbegriff von Patentanspruch 1. Eine derartige Halterung ist bekannt aus der DE 94 21 308 U1.

Wasserrohre, Heizungsrohre oder dgl. werden in Gebäuden oft von Zwischendecken abgehängt, was eine sehr einfache Montage ermöglicht und die Wartung vereinfacht. Zumeist ist es in solchen Fällen erforderlich, eine thermische Isolierung vorzusehen, um Wärmeverluste zu vermeiden und die Bildung von Kondenswasser zu verhindern. Im Bereich der Aufhängungen wird eine solche Isolierung zumeist so durchgeführt, dass zwei kurze Halbschalen aus einem Isoliermaterial um das Rohr gelegt werden und mit einem ringförmigen Bauteil umschlossen werden, an dem die Halterung befestigt wird. Der ringförmige Bauteil ist dabei in der Regel zweiteilig und aus Metall hergestellt, um die notwendigen Belastungen aufnehmen zu können und in situ montiert werden zu können. Herstellung und Montage sind dabei relativ aufwendig kostenintensiv.

Die FR 2 442 366 A zeigt eine Halterung für ein Rohr, bei der ein Haltefuß mit einer ersten Halbschale an einer Wand befestigt wird und das Rohr durch eine zweite Halbschale am Haltefuß gehalten wird. Der Haltefuß ist dabei einstückig ausgebildet, was insbesondere dann möglich ist, wenn eine Isolationswirkung nicht zur Diskussion steht.

Weiters ist aus der DE 86 28 193 U eine Rohrklemme bekannt, die ebenfalls aus einem einstückigen Halteteil mit einem darauf befestigbaren Schließbügel besteht. Auch hier wird keine Rücksicht auf allfällige thermische Isolation genommen.

Aufgabe der vorliegenden Erfindung ist es, eine Vorrichtung der oben beschriebenen Art so weiterzubilden, dass ein einfacher Aufbau erreicht wird. Darüber hinaus soll die Montage erleichtert werden.

Erfindungsgemäß werden diese Aufgaben durch die Merkmale von Patentanspruch 1 gelöst.

Auf diese Weise ist es möglich, den Haltering, der bei der herkömmlichen Lösung benötigt wird, zu vermeiden, was nicht nur die Einsparung eines Bauteils ermöglicht, sondern auch die Montage vereinfacht. Dabei wird zunächst die Aufhängung mit dem daran befestigten ersten Isolierelement am Bauwerk befestigt und danach das Rohr verlegt. Durch einfaches axiales Einschieben des weiteren Isolierelements kann dann die endgültige Befestigung vorgenommen werden.

Ein besonderer Vorteil der erfindungsgemäßen Lösung besteht darin, dass nach der Befestigung des Rohrs mit der erfindungsgemäßen Halterung eine vollständige Isolation leicht vorgenommen werden kann. Durch die glatten Stirnflächen ist es lediglich erforderlich zylindrische Isolationselemente zwischen die Halterungen einzufügen, um eine durchgängige Isolierung ohne Kältebrücken zu erreichen. Gleichzeitig kann bei der erfindungsgemäßen Halterung ein Material mit hohem thermischen Widerstand verwendet werden, da auf die mechanische Festigkeit nur wenig Rücksicht genommen werden muss. Dies liegt an der Tatsache, dass eine separate Aufhängung vorgesehen ist, die die relativ großen Kräfte problemlos aufnehmen kann.

Vorzugsweise sind die Isolierelemente auf Polyurethan-Schaum aufgebaut. Auf diese Weise wird eine sehr hohe Isolierwirkung erreicht und gleichzeitig das Mindesterfordernis für die Strukturfestigkeit erzielt, um eine stabile Halterung zu ermöglichen. Durch die Kraftübertragung über die Platte auf das erste Isolierelement wird bereits eine entsprechende Verteilung erreicht, so dass Spannungsspitzen weitgehend vermieden werden.

Als besonders vorteilhaft im Sinne eines optimalen Kompromisses zwischen Festigkeit und Isolierwerten hat es sich herausgestellt, wenn die Dichte des Polyurethan-Schaumes zwischen 80 kg/m³ und 200 kg/m³ liegt.

Von besonderem Vorteil ist es, wenn die Teilungsebene der beiden Isolierelemente im Bereichs der Rohrs gegenüber der Rohrachse von der Aufhängung weg verschoben ist. Auf diese Weise wird erreicht, dass des Rohr bereits im ersten Isolierelement in einem gewissen Ausmaß festgeklemmt ist, so dass das Rohr während der Montage nicht mehr gehalten werden muss, was die Arbeiten wesentlich erleichtert.

In der Folge wird die Erfindung anhand des in den Figuren dargestellten Ausführungsbeispiels näher erläutert. Es zeigen schematisch:
- Fig. 1: eine erste Ausführung der erfindungsgemäßen Halterung in einer Draufsicht;
- Fig. 2: einen Schnitt nach Linie II-II in Fig. 1;
- Fig. 3: einen Schnitt nach Linie III-III in Fig. 1; und
- Fig. 4: eine seitliche Ansicht in montiertem Zustand.

Die Halterung besteht aus einem ersten Isolierelement 1 und einem zweiten Isolierelement 2, die formschlüssig miteinander verbindbar sind und gemeinsam im Wesentlichen zylindrisch ausgebildet sind. Koaxial zu den beiden Isolierelementen 1, 2 ist eine Rohrleitung 3 aufgenommen, die an einem Gebäudeteil 5, wie etwa einer Zwischendecke, zu befestigen ist. In diesem Gebäudeteil 5 ist eine Aufhängung 4 eingeschraubt, die mit dem ersten Isolierelement 1 verbunden ist. Diese Verbindung erfolgt über eine an der Aufhängung 4 angebrachte Platte 6, die in einer entsprechenden Ausnehmung 7 des ersten Isolierelementes 1 aufgenommen und gehalten ist.

Eine Schwalbenschwanzverbindung 8 sichert das zweite Isolierelement 2 formschlüssig am ersten Isolierelement 1, wobei sich der Begriff "formschlüssig" primär auf die in Gebrauchslage senkrechte Richtung bezieht. In Axialrichtung sind die beiden Isolierelemente 1, 2 gegeneinander verschiebbar. Die Teilungsebene 16 ist gegenüber der Rohrachse 17 nach unten, d.h. weg von der Halterung 4 verschoben, so dass das erste Isolierelement 1 das Rohr 3 klemmend umschließt und zumindest während der Montage in einem gewissen Ausmaß festhält, so dass bis zur Fertigstellung keine Unterstützung des Rohrs erforderlich ist.

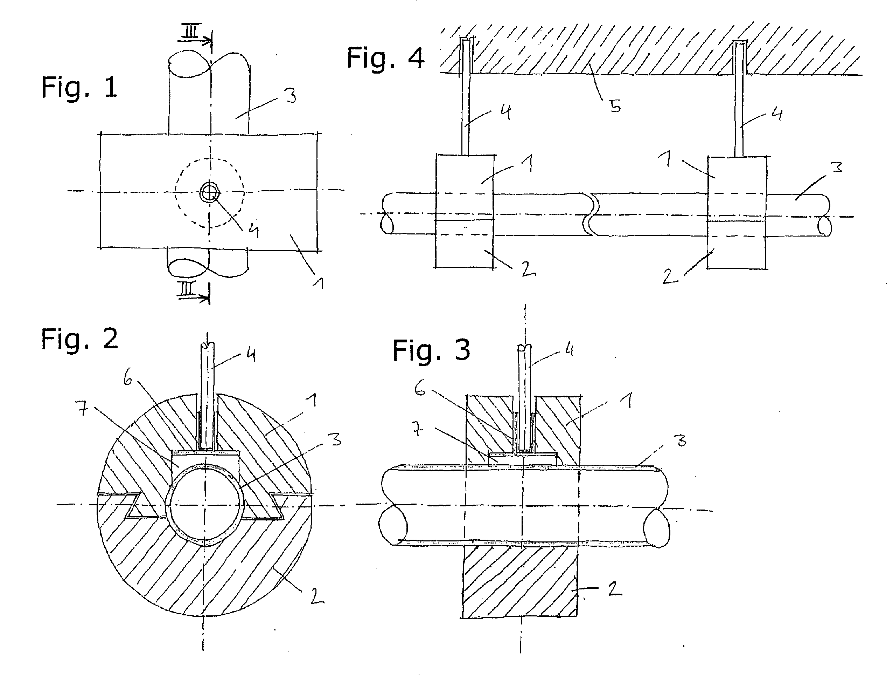

Nachdem der in Fig. 1 dargestellte Zustand erreicht wird, kann das Rohr 3, das nunmehr bereits fest am Gebäude 5 angebracht ist, weiter isoliert werden, was einfach möglich ist, da lediglich zylindrische Isolierelemente zwischen die Halterungen eingefügt werden müssen.

Die beiden Isolationselemente 1, 2 sind aus PU-Schaum hergestellt, der eine Dichte von mindestens 80 kg/m³ aufweist. Für Rohre mit größerem Durchmesser oder kritischere Anwendungen sollte die Dichte mindestens 120 kg/m³ betragen.

Die vorliegende Erfindung ermöglicht es, die Befestigung von Rohren zu vereinfachen und eine kostengünstige und thermisch vorteilhafte Lösung anzugeben.

## Patentansprüche

1. Halterung für Rohre (3), mit einer an einem Bauwerksteil befestigbaren Aufhängung (4) und mit mindestens zwei im Wesentlichen als Halbschalen ausgebildeten Isolierelementen (1, 2), die unter Verwendung einer Schwalbenschwanzverbindung (8) formschlüssig miteinander zu einem zylindrischen Bauteil verbindbar sind, wobei die Aufhängung (4) durch eine Öffnung (9) des ersten Isolierelementes (1) hindurchgeführt ist, **dadurch gekennzeichnet, dass** die Aufhängung (4) das erste Isolierelement (1) mit einer Platte (6) trägt, um das Rohr ohne weiteren Haltering zu halten.

2. Halterung nach Anspruch 1, **dadurch gekennzeichnet, dass** die Teilungsebene (16) der beiden Isolierelemente (1, 2) im Bereichs der Rohrs (3) gegenüber der Rohrachse (17) von der Aufhängung (4) weg verschoben ist.

3. Halterung nach Anspruch 1 oder 2, **dadurch gekennzeichnet, dass** die Isolierelemente (1, 2) auf Polyurethan-Schaum aufgebaut sind.

4. Halterung nach Anspruch 3, **dadurch gekennzeichnet, dass** der Polyurethan-Schaum der Isolierelemente (1, 2) eine Dichte aufweist, die zwischen 80 kg/m³ und 200 kg/m³ liegt.

## Claims

1. A holder for pipes (3), comprising a suspension (4) which can be fastened to a part of a structure and at least two insulating elements (1, 2) which are substantially arranged as half-shells and can be joined with one another in an interlocking manner into a cylindrical component by using a dovetail joint (8), with the suspension (4) being guided through an opening (9) of the first insulating element (1), **characterised in that** the suspension (4) carries the first insulating element (1) with a plate (6) in order to hold the pipe without any further holding ring.

2. A holder according to claim 1, **characterised in that** the dividing plane (16) of the two insulating elements (1, 2) is displaced in the region of the pipe (3) away from the suspension (4) in relation to the pipe axis (17).

3. A holder according to claim 1 or 2, **characterised in that** the insulating elements (1, 2) are based on polyurethane foam.

4. A holder according to claim 3, **characterised in that** the polyurethane foam of the insulating elements (1, 2) has a density which lies between 80 kg/m³ and 200 kg/m³.

## Revendications

1. Fixation de tuyau (3) comportant une suspension (4) fixée à une construction et au moins deux éléments isolants (1, 2) réalisés pratiquement ,sous la forme de demi-coquilles, reliés l'une à l'autre par une liaison par la forme constituée par une liaison en queue d'aronde (8) pour constituer une pièce cylindrique,
la suspension (4) traversant un orifice (9) du premier élément isolant (1).
**caractérisée en ce que**
la suspension (4) porte le premier élément isolant (1) avec une plaque (6) pour tenir le tuyau sans autre collier de fixation.

2. Fixation selon la revendication 1,
**caractérisée en ce que**
le plan de division (16) des deux éléments isolants (1, 2) est décalé au niveau du tuyau (3) par rapport à l'axe (17) du tuyau en s'écartant de la suspension (4).

3. Fixation selon la revendication 1 ou 2,
**caractérisée en ce que**
les éléments isolants (1, 2) sont des éléments expansés en mousse de polyuréthane.

4. Fixation selon la revendication 3,
**caractérisée en ce que**
la mousse de polyuréthane des éléments isolants (1, 2) a une densité comprise entre 80 kg/m³ et 200 kg/m³.
